# EUROPÄISCHE PATENTANMELDUNG

(11) **EP 4 633 218 A1**
(43) Veröffentlichungstag der Anmeldung: **15.10.2025**
(21) Anmeldenummer: 25168559.0
(22) Anmeldetag: 04.04.2025
(51) Int. Cl.: H04W 12/47, H04W 12/082, H04W 12/63, G06F 21/34, G06F 21/62

(54) **VERFAHREN, INSBESONDERE ZUM BETREIBEN EINES SYSTEMS MIT EINEM HINTERGRUNDSYSTEM UND EINER MEHRZAHL VON GERÄTEN**

(30) Priorität: 09.04.2024 DE 102024109873
(71) Anmelder: TeraTron GmbH, 51647 Gummersbach (DE)
(72) Erfinder: Döhl, Andreas, 51647 Gummersbach (DE); Schmale, Ralf, 42499 Hückeswagen (DE); Konrad, Peter, 51643 Gummersbach (DE)
(74) Vertreter: Cohausz & Florack

(57) **Zusammenfassung**

Die Erfindung betrifft ein Verfahren, insbesondere zum Betreiben eines Systems mit einem Hintergrundsystem und einer Mehrzahl von Geräten, umfassend Empfangen, durch ein Empfangsmodul des Hintergrundsystems, eines ersten Datensatzes, enthaltend einen ersten Schlüsselcodes eines ersten Schlüssels und eine erste Freigabevorrichtungskennung einer ersten Freigabevorrichtung, von der ersten Freigabevorrichtung über eine Routervorrichtung, wenn sich der erste Schlüssel in einer Empfangsreichweite der ersten Freigabevorrichtung befindet, Bestimmen, durch ein erstes Bestimmungsmodul des Hintergrundsystems, eines mit der ersten Freigabevorrichtung gekoppelten ersten Geräts, basierend auf der empfangenen ersten Freigabevorrichtungskennung und einer ersten Zuordnungsdatenbank, enthaltend zumindest eine erste Zuordnung zwischen der ersten Freigabevorrichtungskennung und des ersten Geräts, Bestimmen, durch ein zweites Bestimmungsmodul des Hintergrundsystems, mindestens einer ersten mit dem ersten Schlüssel verknüpften Anwendung, basierend auf dem empfangenen ersten Schlüsselcode und einer zweiten Zuordnungsdatenbank, enthaltend zumindest eine erste Verknüpfung zwischen der mindestens einen ersten Anwendung und dem ersten Schlüsselcode, und Bereitstellen, durch ein Bereitstellmodul des Hintergrundsystems, zumindest der ersten Anwendung über die Routervorrichtung, derart, dass die erste Anwendung auf dem ersten Gerät ausführbar ist.

## Beschreibung

Die Erfindung betrifft ein Verfahren, insbesondere zum Betreiben eines Systems mit einem Hintergrundsystem und einer Mehrzahl von Geräten. Darüber hinaus betrifft die Erfindung ein Hintergrundsystem, ein System und ein Computerprogramm.

Zum Sicheren Betreiben eines Geräts, wie ein Computer, Tablet-Computer, Smartphone, Laptop etc., ist es bekannt, vor einem Freigeben des Geräts, insbesondere zum Ermöglichen eines Ausführens einer Anwendung durch das Gerät, eine Authentifizierung des Nutzers durchzuführen. Beispielsweise kann der Nutzer aufgefordert werden, einen Nutzernamen und ein Passwort über eine Nutzerschnittstelle (z.B. Tastatur) einzugeben. Die Freigabe des Geräts kann insbesondere nur dann erfolgen, wenn die Authentifizierung erfolgreich ist, also der eingegebene Nutzername und das zugehörige Passwort zulässig sind. Beispielsweise kann das freizugebende Gerät oder ein Hintergrundsystem eine Prüfung der Authentifizierung bzw. den Authentifizierungsvorgang ausführen.

Zur Erhöhung der Sicherheit, aber auch zum Verbessern des Nutzerkomforts, ist aus dem Stand der Technik die Nutzung von tragbaren Schlüsseln bekannt, um Geräte sicher zu betreiben. So ist es bekannt, ein zu kontrollierendes bzw. freizugebendes Gerät mit einer Freigabevorrichtung zu (fest) koppeln. Die Freigabevorrichtung kann eingerichtet sein zum Aussenden eines Abfragefelds mit einer vordefinierten Empfangsreichweite. Gelangt ein Schlüssel, der von einem (berechtigten) Nutzer bei sich getragen wird, in das Abfragefeld bzw. in die Empfangsreichweite der Freigabevorrichtung, sendet der Schlüssel als Antwort einen in dem Schlüssel gespeicherten Schlüsselcode aus. Eine Freigabe des Geräts kann nur bei Erhalt des Schlüsselcodes erfolgen. Insbesondere kann die Freigabe des Geräts nur dann erfolgen, wenn eine Überprüfung des Schlüsselcodes erfolgreich ist, also der empfange Schlüsselcode ein für das Gerät zulässiger Schlüsselcode ist. Beispielsweise kann das Gerät oder ein Hintergrundsystem eine Prüfung dieser Authentifizierung bzw. den Authentifizierungsvorgang ausführen.

Wenn der Schlüssel nicht mehr innerhalb der Empfangsreichweite ist, also sich entsprechend von der Freigabevorrichtung entfernt hat, kann das Gerät (wieder) gesperrt werden.

Nachteilig bei dem Stand der Technik ist jedoch, insbesondere in Anwendungsgebieten, bei dem ein System eine Vielzahl von Geräten umfasst und ein Nutzer häufig zwischen unterschiedlichen Geräten des Systems wechseln muss, wie es beispielsweise in einem Krankenhaussystem der Fall ist, das der Nutzer nach einer Freigabe stets die gewünschte Anwendung (erneut) aufrufen und starten muss. Dies ist häufig mit einem erhöhten Zeitaufwand verbunden, so dass ein entsprechendes System nicht effizient betrieben werden kann.

Daher liegt der Erfindung die Aufgabe zugrunde, eine Möglichkeit bereitzustellen, welche die Nachteile des Stands der Technik zumindest reduziert und insbesondere ermöglicht, ein System mit einer Mehrzahl von Geräten effizient und gleichzeitig sicher zu betreiben.

Die Aufgabe wird gemäß einem ersten Aspekt der Erfindung gelöst durch ein Verfahren, insbesondere zum Betreiben eines Systems mit einem Hintergrundsystem und einer Mehrzahl von Geräten. Das Verfahren umfasst:
- Empfangen, durch ein Empfangsmodul des Hintergrundsystems, eines ersten Datensatzes, enthaltend einen ersten Schlüsselcode eines ersten Schlüssels und eine erste Freigabevorrichtungskennung einer ersten Freigabevorrichtung, von der ersten Freigabevorrichtung über eine Routervorrichtung, wenn sich der erste Schlüssel in einer Empfangsreichweite der ersten Freigabevorrichtung befindet,
- Bestimmen, durch ein erstes Bestimmungsmodul des Hintergrundsystems, eines mit der ersten Freigabevorrichtung gekoppelten ersten Geräts, basierend auf der empfangenen ersten Freigabevorrichtungskennung und einer ersten Zuordnungsdatenbank, enthaltend zumindest eine erste Zuordnung zwischen der ersten Freigabevorrichtungskennung und des ersten Geräts (bzw. einer ersten Gerätekennung des ersten Geräts),
- Bestimmen, durch ein zweites Bestimmungsmodul des Hintergrundsystems, mindestens einer ersten mit dem ersten Schlüssel verknüpften Anwendung, basierend auf dem empfangenen ersten Schlüsselcode und einer zweiten Zuordnungsdatenbank, enthaltend zumindest eine erste Verknüpfung zwischen der mindestens einen ersten Anwendung (bzw. einer Anwendungskennung) und dem ersten Schlüsselcode, und
- Bereitstellen, durch ein Bereitstellmodul des Hintergrundsystems, zumindest der ersten Anwendung über die Routervorrichtung, derart, dass die erste Anwendung auf dem ersten (freigegebenen) Gerät ausführbar ist.

Indem im Gegensatz zum Stand der Technik in einem Hintergrundsystem eine Zuordnung zwischen einem ersten Gerät und einer ersten Freigabevorrichtung und eine Verknüpfung zwischen einem ersten Schlüsselcode und mindestens einer ersten Anwendung gespeichert ist, werden die Nachteile des Stands der Technik zumindest reduziert. Insbesondere wird hierdurch ermöglicht, ein System mit einer Mehrzahl von Geräten effizient und gleichzeitig sicher zu betreiben. Insbesondere ermöglicht die Erfindung ein (berührungsloses) Mitnehmen einer Anwendung von einem ersten (freigegebenen) Gerät zu einem zweiten (freigegebenen) Gerät durch einen Nutzer mit einem Schlüssel.

Das Verfahren kann insbesondere durch ein Hintergrundsystem ausgeführt werden bzw. zum Steuern eines Hintergrundsystems dienen. Ein Hintergrundsystem kann durch mindestens eine Datenverarbeitungsvorrichtung (z.B. mindestens ein Server, eine Cloud etc.) gebildet sein, umfassend mindestens einen Prozessor und mindestens ein Speichermittel, wobei Prozessor und Speichermittel eingerichtet sind zum Ausführen und/oder Steuern der Module des Hintergrundsystems.

Das Hintergrundsystem umfasst mindestens ein Empfangsmodul. Das Empfangsmodul kann mit mindestens einer Routervorrichtung kommunikativ verbindbar sein, beispielsweise über ein drahtloses und/oder drahtgebundenes Kommunikationsnetz (insbesondere ein Fernkommunikationsnetz bzw. Fernnetz).

Gemäß einer Ausführung des erfindungsgemäßen Systems kann das System die Routervorrichtung umfassen. Die Routervorrichtung kann beispielsweise ein LAN (Local Area Network) Router oder ein W-LAN (Wirelesse Local Area Network) Router oder dergleichen sein. Über ein internes Kommunikationsnetz können eine Mehrzahl von Geräten mit der Routervorrichtung verbindbar sein. Beispielhafte und nicht abschließende Geräte sind Computer, Laptops, Desktop-PCs, Smartphones, Tablet-Computer etc.

Das Empfangsmodul kann eingerichtet sein zum Empfangen von Datensätzen, enthaltend jeweils zumindest einen Schlüsselcode eines Schlüssels und eine Freigabevorrichtungskennung einer Freigabevorrichtung, die den Schlüsselcode des Schlüssels (zuvor von diesem Schlüssel) empfangen hat. Insbesondere kann die Freigabevorrichtung bei Empfang eines Schlüsselcodes eines in der Empfangsreichweite der Freigabevorrichtung befindlichen Schlüssels einen Datensatz generieren, enthaltend diesen Schlüsselcode und die Freigabevorrichtungskennung dieser Freigabevorrichtung. Der generierte Datensatz kann durch die Freigabevorrichtung über die Routervorrichtung an das Hintergrundsystem übertragen werden. Insbesondere kann ein entsprechender Datensatz bei jedem (erneuten) Empfang des Schlüsselcodes generiert und insbesondere übertragen werden.

Ein Schlüsselcode ist insbesondere ein (systemweit) eindeutiger Code, anhand dessen der zugehörige Schlüssel eindeutig identifizierbar ist. Der Schlüsselcode kann (unveränderlich) in einer Speichereinheit des Schlüssels gespeichert sein. Ein Schlüssel kann insbesondere ein (durch einen Nutzer) tragbarer Schlüssel sein. Ein Schlüssel kann einem Nutzer (eindeutig) zugeordnet sein. Mit anderen Worten, der Nutzer kann anhand des Schlüssels identifiziert werden.

Eine Freigabevorrichtungskennung ist insbesondere ein (systemweit) eindeutiger Code, anhand dessen die zugehörige Freigabevorrichtung eindeutig identifizierbar ist. Die Freigabevorrichtungskennung kann (unveränderlich) in einer Speichereinheit der Freigabevorrichtung gespeichert sein.

Ein erster Datensatz enthält zumindest einen ersten Schlüsselcodes eines ersten Schlüssels und eine erste Freigabevorrichtungskennung einer ersten Freigabevorrichtung, die mit einem ersten Gerät (fest) gekoppelt ist. Mit anderen Worten, die Freigabevorrichtung ist dem ersten Gerät eindeutig zugeordnet. Insbesondere kann jede Freigabevorrichtung des Systems jeweils (genau) einem Gerät des Systems zugeordnet sein.

Das Hintergrundsystem kann ein erstes Bestimmungsmodul in Form von durch einen Prozessor des Hintergrundsystems ausführbaren Softwaremoduls umfassen. Ein erstes Bestimmungsmodul ist eingerichtet zum Bestimmen des Geräts, das mit der Freigabevorrichtung verbunden ist, deren Freigabevorrichtungskennung durch das Empfangsmodul empfangen wurde.

Insbesondere kann das Hintergrundsystem in einem Datenspeicher eine erste Zuordnungsdatenbank umfassen. **In** der ersten Zuordnungsdatenbank können die jeweiligen Zuordnungen zwischen jeweiligen Freigabevorrichtungen des Systems und jeweiligen Geräten des Systems gespeichert sein. Insbesondere kann jeder Freigabevorrichtungskennung eine jeweilige Gerätekennung zugeordnet sein. Vorzugsweise können daher in der ersten Zuordnungsdatenbank eine Vielzahl von (logischen) Zuordnungen gespeichert sein.

Insbesondere sei angemerkt, dass eine Zuordnung zwischen einer Freigabevorrichtung und einem Gerät (nur) logisch sein kann und/oder über eine drahtlose Verbindung (z.B. USB-Verbindung) zwischen einer Freigabevorrichtung und einem Gerät erfolgen kann. Insbesondere wenn nur eine logische Zuordnung bzw. Verknüpfung zwischen einer Freigabevorrichtung und einem Gerät vorliegt, kann die Freigabevorrichtung über einen eigene Stromversorgung verfügen, wie einen Stromanschluss und/oder eine Batterie.

Das erste Bestimmungsmodul kann anhand der empfangenen Freigabevorrichtungskennung und der ersten Zuordnungsdatenbank bestimmen, welches Gerät der Freigabevorrichtung mit dieser Freigabevorrichtungskennung zugeordnet ist. So erfolgt zumindest ein Bestimmen, durch ein erstes Bestimmungsmodul des Hintergrundsystems, eines mit der ersten Freigabevorrichtung gekoppelten ersten Geräts, basierend auf der empfangenen ersten Freigabevorrichtungskennung und einer ersten Zuordnungsdatenbank, enthaltend zumindest eine erste Zuordnung zwischen der ersten Freigabevorrichtungskennung und des ersten Geräts.

Mit anderen Worten, logische Zuordnungen bzw. Verknüpfungen zwischen jeweiligen Geräten und jeweiligen Freigabevorrichtungen des Systems sind in der ersten Zuordnungsdatenbank gespeichert.

Erfindungsgemäß erfolgt zusätzlich ein Bestimmen einer durch das bestimmte und insbesondere freizugebende Gerät auszuführenden Anwendung. Dies meint insbesondere, das bestimmt wird, welche Anwendung auf dem freizugebenden Gerät automatisch nach der Freigabe gestartet wird.

Insbesondere können in einem (durch das Hintergrundsystem kontrollierbaren) Anwendungsspeicher (beispielsweise eine Cloud) eine Mehrzahl von (nutzerspezifischen) Anwendungen gespeichert sein. Auf diesen Anwendungsspeicher kann durch das bestimmte Gerät des Systems zugegriffen werden, so dass die bestimmte Anwendung durch das Gerät ausgeführt werden kann.

Erfindungsgemäß ist eine zweite Zuordnungsdatenbank vorgesehen, beispielsweise gespeichert in dem Hintergrundsystem. Ein zweites (durch einen Prozessor des Hintergrundsystems ausführbares) Bestimmungsmodul des Hintergrundsystems ist eingerichtet zum Bestimmen der Anwendung, die mit dem Schlüssel verbunden ist, dessen Schlüsselcode empfangen wurde. In der zweiten Zuordnungsdatenbank können die jeweiligen Verknüpfungen zwischen jeweiligen (nutzerspezifischen) Anwendungen des Systems und jeweiligen Schlüsseln (der entsprechenden Nutzern) des Systems gespeichert sein. Insbesondere kann jedem Schlüsselcode mindestens eine jeweilige Anwendungskennung einer jeweiligen nutzerspezifischen Anwendung des Nutzers des genannten Schlüsselcodes zugeordnet sein. Mit anderen Worten, logische Zuordnungen bzw. Verknüpfungen zwischen jeweiligen Anwendungen und jeweiligen Schlüsselcodes sind in der zweiten Zuordnungsdatenbank gespeichert.

Das zweite Bestimmungsmodul kann anhand des empfangenen Schlüsselcodes und der zweiten Zuordnungsdatenbank bestimmen, welche Anwendung dem Schlüssel mit diesem Schlüsselcode zugeordnet ist. So erfolgt zumindest ein Bestimmen, durch ein zweites Bestimmungsmodul des Hintergrundsystems, mindestens einer ersten mit dem ersten Schlüssel verknüpften Anwendung, basierend auf dem empfangenen ersten Schlüsselcode und einer zweiten Zuordnungsdatenbank, enthaltend zumindest eine erste Verknüpfung zwischen der mindestens einen ersten Anwendung (bzw. einer Anwendungskennung) und dem ersten Schlüsselcode.

Ferner umfasst das Hintergrundsystem mindestens ein (durch den Prozessor des Hintergrundsystems ausführbares) Bereitstellmodul. Insbesondere kann die Anwendung, die durch das zweite Bestimmungsmodul bestimmt wurde, auf dem Gerät, das durch das erste Bestimmungsmodul bestimmt wurde, zum Ausführen durch das bestimmte (und insbesondere durch die Freigabevorrichtung freigegebene) Gerät bereitgestellt werden, insbesondere mittels der Routervorrichtung. Insbesondere kann das Bereitstellen, gesteuert durch das Bereitstellmodul, ein Aufbauen einer Datenverbindung via z.B. TCP/IP zwischen dem bestimmten Gerät und dem Anwendungsspeicher (z.B. eine Cloud bzw. ein Cloudsystem) umfassen, so dass die bestimmte Anwendung durch das bestimmte Gerät ausführbar ist. Mit anderen Worten, der Nutzer mit dem Schlüssel kann unmittelbar die bestimmte Anwendung an dem bestimmten Gerät ausführen.

Hierbei sei angemerkt, dass der Nutzer die Anwendung in dem Zustand weiter ausführen kann, wie er sie bei der letzten Nutzung (und ggf. erfolgter Speicherung) verlassen hat. Insbesondere kann nach einem Verlassen einer Anwendung der Zustand der Anwendung abgespeichert werden und bei einem erneuten Aufrufen bzw. Starten der Anwendung in diesem Zustand weiterbetrieben werden.

Eine Anwendung meint vorliegend insbesondere eine Softwareanwendung in Form eines Computerprogramms, das durch eine Rechenvorrichtung (z.B. die genannte Cloud bzw. der Anwendungsspeicher) mittels des genannten Geräts ausgeführt werden kann. Beispielhafte und nicht abschließende Anwendungen sind Mailprogramme, Kalenderprogramme, Patientenverwaltungsprogramme, Tabellenprogramme, Schreibprogramme etc. Insbesondere kann eine Anwendung nutzerspezifisch in dem Anwendungsspeicher in bekannter Weise gespeichert sein. Die einem definierten Nutzer zugeordnete Anwendung kann insbesondere mittels des Schlüsselcodes bestimmbar bzw. identifizierbar sein.

Vorzugsweise können einem Schlüssel bzw. einem Schlüsselcode (bzw. einem Nutzer) eine Mehrzahl von Anwendungen zugeordnet sein bzw. diese können miteinander verknüpft sein. Insbesondere können einem jeweiligen Schlüsselcode eine Mehrzahl von (nutzerspezifischen) Anwendungen zugeordnet sein.

Das Bestimmen der Anwendung durch das zweite Bestimmungsmodul kann, gemäß einer Ausführungsform, auf mindestens einer Bestimmungsregel basieren. Die Bestimmungsregel kann insbesondere angeben, welche Anwendung aus der Mehrzahl von Anwendungen bestimmt wird. Beispielsweise kann die Bestimmungsregel vorgegeben, dass stets die gleiche (vorgebbare) Anwendung initial gestartet wird oder stets die zuletzt vom Nutzer verwendete Anwendung initial gestartet wird und/oder dergleichen. Der Nutzerkomfort kann noch weiter verbessert werden.

Gemäß einer Ausführungsform kann ein Freigeben des bestimmten Geräts erfolgen, wenn festgestellt wird, dass der Schlüsselcode zum Betreiben des Geräts berechtigt. Beispielsweise kann eine entsprechende Überprüfung durch das Hintergrundsystem oder durch die jeweilige Freigabevorrichtung erfolgen. Insbesondere bei einem Feststellen, dass der Schlüsselcode zum Betreiben des Geräts berechtigt, kann dieses Gerät freigegeben und die bestimmte Anwendung automatisch gestartet werden, so dass diese durch das Gerät ausführbar bzw. bedienbar ist.

Gemäß einer bevorzugten Ausführungsform des erfindungsgemäßen Verfahrens kann das Verfahren (ferner) umfassen:
- zumindest nahezu kontinuierliches Erfassen einer Anwesenheit des ersten Schlüssels in der Empfangsreichweite der ersten Freigabevorrichtung, und
- zumindest Beenden eines Ausführens der mindestens einen ersten Anwendung auf dem ersten Gerät, wenn festgestellt wird, dass der erste Schlüssel nicht mehr in der Empfangsreichweite der ersten Freigabevorrichtung anwesend ist.

Insbesondere kann durch eine jeweilige Freigabevorrichtung kontinuierlich der mindestens eine in der Empfangsreichweite der ersten Freigabevorrichtung befindliche bzw. anwesende Schlüssel erfasst werden. Ein Freigeben eines Ausführens einer Anwendung auf dem bestimmten Gerät kann nur so lange erfolgen, wie der entsprechende Schlüssel sich in der Empfangsreichweit der Freigabevorrichtung des bestimmten Geräts befindet. Insbesondere kann zumindest ein Beenden des Ausführens der bestimmten Anwendung erfolgen, wenn der Schlüssel nicht mehr in der Empfangsreichweite der genannten Freigabevorrichtung detektiert wird bzw. erfasst wird. Wenn also der Schlüssel außerhalb der Empfangsreichweite der Freigabevorrichtung ist, kann zumindest die Anwendung beendet werden.

Vorzugsweise kann das Beenden der Anwendung durch ein Sperren des bestimmten Geräts erfolgen. Ein Beenden (insbesondere Sperren) der Anwendung kann unmittelbar bei einem Erfassen, dass der Schlüssel die Empfangsreichweite der Freigabevorrichtung verlassen hat oder nach ein bestimmten Zeitdauer (z.B. zwischen 0,5 s und 60 s, vorzugsweise zwischen 1 s und 5 s) nach einer entsprechenden Detektion erfolgen. Die Sicherheit kann noch weiter verbessert werden.

Gemäß einer weiteren bevorzugten Ausführungsform des erfindungsgemäßen Verfahrens kann das Verfahren (ferner) umfassen:
- Empfangen, durch das Empfangsmodul des Hintergrundsystems, eines zweiten Datensatzes, enthaltend den ersten Schlüsselcode des ersten Schlüssels und eine zweite Freigabevorrichtungskennung einer zweiten Freigabevorrichtung, von der zweiten Freigabevorrichtung über die Routervorrichtung, wenn sich der erste Schlüssel in einer Empfangsreichweite der zweiten Freigabevorrichtung befindet,
- Bestimmen, durch das erste Bestimmungsmodul des Hintergrundsystems, eines mit der zweiten Freigabevorrichtung gekoppelten zweiten Geräts, basierend auf der empfangenen zweiten Freigabevorrichtungskennung und der ersten Zuordnungsdatenbank, enthaltend zumindest eine zweite Zuordnung zwischen der zweiten Freigabevorrichtungskennung und des zweiten Geräts (bzw. einer zweiten Gerätekennung des zweiten Geräts),
- Bestimmen, durch das zweite Bestimmungsmodul des Hintergrundsystems, der mindestens einen ersten mit dem ersten Schlüssel verknüpften Anwendung, basierend auf dem empfangenen ersten Schlüsselcode und der zweiten Zuordnungsdatenbank, enthaltend zumindest die erste Verknüpfung zwischen der mindestens einen ersten Anwendung (bzw. einer Anwendungskennung) und dem ersten Schlüsselcode, und
- Bereitstellen, durch das Bereitstellmodul des Hintergrundsystems, zumindest der ersten Anwendung über die Routervorrichtung, derart, dass die erste Anwendung auf dem zweiten Gerät ausführbar ist.

Wie bereits beschrieben wurde, kann entsprechendes für jeden Schlüssel des Systems und für jedes Gerät bzw. jede Freigabevorrichtung des Systems vorgesehen sein. Insbesondere kann hierdurch ein Nutzer von einem ersten Gerät des Systems zu einem weiteren Gerät des Systems wechseln, und an dem weiteren Gerät automatisch die zuvor an dem ersten Gerät ausgeführte Anwendung (weiter) ausführen. Mit anderen Worten, ein Mitnehmen der Anwendung von Gerät zu Gerät wird erfindungsgemäß ermöglicht.

Ein weiterer Aspekt der Erfindung ist ein (zuvor beschriebenes) Hintergrundsystem für ein System einer Mehrzahl von Geräten. Das Hintergrundsystem umfasst ein Empfangsmodul, eingerichtet zum Empfangen eines ersten Datensatzes, enthaltend einen ersten Schlüsselcode eines ersten Schlüssels und eine erste Freigabevorrichtungskennung einer ersten Freigabevorrichtung, von der ersten Freigabevorrichtung über eine Routervorrichtung, wenn sich der erste Schlüssel in einer Empfangsreichweite der ersten Freigabevorrichtung befindet. Das Hintergrundsystem umfasst ein erstes Bestimmungsmodul, eingerichtet zum Bestimmen eines mit der ersten Freigabevorrichtung gekoppelten ersten Geräts, basierend auf der empfangenen ersten Freigabevorrichtungskennung und einer ersten Zuordnungsdatenbank, enthaltend zumindest eine erste Zuordnung zwischen der ersten Freigabevorrichtungskennung und des ersten Geräts (bzw. einer ersten Gerätekennung des ersten Geräts). Das Hintergrundsystem umfasst ein zweites Bestimmungsmodul, eingerichtet zum Bestimmen einer ersten mit dem ersten Schlüssel verknüpften Anwendung, basierend auf dem empfangenen ersten Schlüsselcode und einer zweiten Zuordnungsdatenbank, enthaltend zumindest eine erste Verknüpfung zwischen der mindestens einen ersten Anwendung (bzw. einer Anwendungskennung) und dem ersten Schlüsselcode. Das Hintergrundsystem umfasst ein Bereitstellmodul, eingerichtet zum Bereitstellen zumindest der ersten Anwendung über die Routervorrichtung, derart, dass die erste Anwendung auf dem ersten (freigegebenen) Gerät ausführbar ist.

Ein noch weiterer Aspekt der Erfindung ist ein System zur Kontrolle von Geräten. Das System umfasst ein zuvor beschriebenes Hintergrundsystem (nach Anspruch 4). Das System umfasst mindestens die erste dem ersten Gerät zugeordnete Freigabevorrichtung.

Wie bereits beschrieben wurde, kann das erfindungsgemäße System das erste Gerät umfassen und insbesondere ein zweites Gerät. Besonders bevorzugt kann das System mehr als zwei Geräte umfassen kann. Fener kann das erfindungsgemäße System die (zuvor beschriebene) Routervorrichtung umfassen.

Das erfindungsgemäße System kann mindestens eine zweite einem zweiten Gerät zugeordnete Freigabevorrichtung umfassen. Insbesondere dann, wenn das System mehr als zwei Geräte umfassen kann, können vorzugsweise jedem dieser Geräte eine jeweilige Freigabevorrichtung zugeordnet sein, die das System insbesondere umfassen kann.

Ferner kann das System vorzugsweise zumindest den ersten (tragbaren) Schlüssel umfassen. Insbesondere kann das System eine Vielzahl von (tragbaren) Schlüsseln umfassen.

Gemäß einer weiteren Ausführungsform des erfindungsgemäßen Systems kann die erste Freigabevorrichtung (vorzugsweise jede Freigabevorrichtung des Systems) ein Kommunikationsmodul umfassen. Das Kommunikationsmodul kann eingerichtet sein zum (bidirektionalen) Kommunizieren mit der Routervorrichtung (bzw. dem Hintergrundsystem via der Routervorrichtung). Insbesondere kann das Kommunikationsmodul eingerichtet sein zum Übertragen des (zuvor beschriebenen) Datensatzes an die Routervorrichtung, welche den genannten Datensatz an das Empfangsmodul des Hintergrundsystems weiterleitet, wie insbesondere bereits beschrieben wurde.

Gemäß einer weiteren Ausführungsform des erfindungsgemäßen Systems kann die erste Freigabevorrichtung eingerichtet sein zum Aussenden eines Abfragefelds. Die Reichweite des Abfragefelds repräsentiert insbesondere die maximale Empfangsreichweite der Freigabevorrichtung.

Wie bereits beschrieben wurde, kann das erfindungsgemäße System zumindest den ersten Schlüssel umfassen. Der erste Schlüssel (insbesondere jeder Schlüssel) kann eingerichtet sein zum Aussenden des ersten Schlüsselcodes bei einem Empfangen des Abfragefelds durch den Schlüssel. Der erste Schlüssel (insbesondere jeder Schlüssel) kann insbesondere eingerichtet sein zum eigengespeisten Aussenden des ersten (bzw. jeweiligen) Schlüsselcodes bei einem Empfangen des Abfragefeldes. Die erste Freigabevorrichtung (insbesondere jede Freigabevorrichtung) kann eingerichtet sein zum Freigeben des ersten (bzw. jeweiligen) Gerätes bei einem Empfangen des ersten (bzw. jeweiligen) Schlüsselcodes.

Wie bereits beschrieben wurde, ist ein Gerät des Systems bevorzugt ein Computer. Dieser mindestens eine Computer ist bevorzugt, wie bereits beschrieben wurde, an ein internes Netzwerk angeschlossen und die Freigabe erfolgt durch Freigabe eines Zugriffs auf das Netzwerk. Auch ist zusätzlich eine Entschlüsselung eines verschlüsselten Datenträgers in dem Computer eine mögliche Freigabe. Insbesondere umfasst das Freigeben des ersten Geräts ein zuvor beschriebenes Bereitstellen einer durch das Hintergrundsystem bestimmten Anwendung, die dem Nutzer bzw. seinem Schlüssel zugeordnet ist.

Es ist insbesondere erkannt worden, dass die Reichweiteneinstellung immer dann problematisch ist, wenn der Schlüssel energetisch durch das Abfragefeld gespeist wird. Daher wird vorgeschlagen, dass der Schlüssel insbesondere eigengespeist ein Antwortfeld erzeugt. Sobald der Schlüssel das Abfragefeld, bevorzugt die magnetische Komponente, das B-Feld, erfasst, kann der Schlüssel aktiviert werden. Jedoch kann der Schlüssel seine Energie nicht aus dem Abfragefeld beziehen, sondern eine eigene Energieversorgung (z.B. eine Batterie) aufweisen. Durch diese eigene

Energieversorgung kann das Antwortfeld erzeugt werden. Dieses Antwortfeld enthält den (jeweiligen) Schlüsselcode.

**In** einer Freigabevorrichtung kann das Antwortfeld empfangen und insbesondere der Schlüsselcode überprüft werden. Bei einer positiven Überprüfung kann das dieser Freigabevorrichtung zugeordnete Gerät freigegeben werden und insbesondere ein zuvor beschriebenes Bereitstellen der bestimmten Anwendung erfolgen. Bei Varianten der Erfindung kann die Überprüfung alternativ oder zusätzlich durch das Hintergrundsystem erfolgen.

Der Austausch eines Schlüsselcodes über das Antwortfeld erfolgt bevorzugt verschlüsselt. Geeignete Verschlüsselungsalgorithmen sind bekannt.

Das Abfragefeld kann beispielsweise mit einem eindeutigen Bezeichner der Freigabevorrichtung (z.B. die zuvor beschriebene Freigabevorrichtungskennung und/oder eine Gerätekennung) codiert sein. Dieser eindeutige Bezeichner kann beispielsweise das Gerät bezeichnen, für den eine Zugangsberechtigung abgefragt wird. Der Schlüssel kann aus dem empfangenen Abfragefeld den eindeutigen Bezeichner ermitteln, und beispielsweise nur dann reagieren, wenn der eindeutige Bezeichner mit einem von mehreren in dem Schlüssel hinterlegten eindeutigen Bezeichnern übereinstimmt. Dadurch kann der Schlüssel für vordefinierbare Geräte programmiert werden.

Das Abfragefeld wird bevorzugt im Broadcast-Modus ausgesendet. D. h., dass das Abfragefeld in regelmäßigen Abständen durch eine Freigabevorrichtung erzeugt wird und von allen Schlüsseln, die in der Empfangsreichweite des Abfragefeldes sind, empfangen werden kann.

Empfängt ein Schlüssel das Abfragefeld, kann dieser die im Abfragefeld enthaltenden Daten auswerten, beispielsweise den eindeutigen Bezeichner. Stimmt dieser mit einem für den Schlüssel vorgesehenen eindeutigen Bezeichner überein, meldet sich der Schlüssel bei der Freigabevorrichtung an. Hierzu sendet der Schlüssel ein elektromagnetisches Antwortfeld aus, welches einen Schlüsselcode enthält. Es ist beispielsweise möglich, dass der Schlüssel als Schlüsselcode nur seine Identifikationsnummer übermittelt. Diese Identifikationsnummer wird in der Freigabevorrichtung aus dem Antwortfeld ermittelt. Stimmt die Identifikationsnummer mit einer Identifikationsnummer (bzw. einem Schlüsselcode) aus einer in der Freigabevorrichtung und/oder dem Gerät und/oder dem Hintergrundsystem gespeicherten Liste überein, so kann anschließend noch eine zusätzliche (optionale) eine Authentifizierung des Schlüssels durchgeführt werden. Hierbei können auch zusätzliche Authentifizierungsinformationen, bevorzugt verschlüsselt, über das elektromagnetische Antwortfeld zwischen Schlüssel und Freigabevorrichtung ausgetauscht werden. Beispielsweise kann erst bei erfolgreicher Authentifizierung das Gerät durch die Freigabevorrichtung (oder durch das Hintergrundsystem) freigeschaltet werden.

Es ist auch möglich, dass mehrere Schlüssel gleichzeitig das Abfragefeld sensieren. Um eine Störung der jeweils von den Schlüsseln ausgesendeten Antwortfelder untereinander zu vermeiden, wird auch vorgeschlagen, vor dem Aussenden des Antwortfeldes eine Anti-Kollisionsüberprüfung durchzuführen. Dabei kann beispielsweise ein Carrier-Sense-Multiple-Access (CSMA) Algorithmus angewandt werden. Auch ist ein Collision-Detect (CD) Modus aktivierbar.

Insbesondere kann eine Prioritätsregel in der Freigabevorrichtung implementiert sein. Beispielsweise kann die Prioritätsregel vorgeben, dass (stets) (nur) der Schlüssel, der zuerst durch die Freigabevorrichtung sensiert wird, Zugriff auf das Gerät erhält, bis dieser Schlüssel das Abfragefeld wieder verlässt (wie zuvor beschrieben wurde). Ein zweiter Schlüssel, der nach dem ersten Schlüssel ins Abfragefeld gelangt und dort zusammen mit dem ersten Schlüssel anwesend ist, kann erst nach der Detektion eines Verlassens des ersten Schlüssels Zugriff auf das Gerät erhalten, also eine (wie zuvor beschrieben) bestimmte Anwendung ausführen, die diesem Schlüssel zugeordnet ist. Dennoch kann vorzugsweise bereits ein zweiter Datensatz für den zweiten Schlüssel generiert und an das Hintergrundsystem übermittelt werden.

Bei anderen Varianten der Erfindung können alternativ oder zusätzlich den Schlüssel unterschiedliche Prioritäten zugeordnet sein. Die Prioritätsregel kann vorgeben, dass (stets) (nur) der Schlüssel mit der höheren Priorität Zugriff auf das Gerät erhält (auch wenn dieser beispielsweise erst nach einem anderen Schlüssel in die Empfangsreichweite der Freigabevorrichtung gelangt ist).

Wie bereits beschrieben wurde, kann die Erfassung des Schlüssels in der Empfangsreichweite der Freigabevorrichtung und insbesondere eine optionale Authentifizierung des Schlüssels nahezu kontinuierlich erfolgen, insbesondere in regelmäßigen Abständen. Dadurch kann erreicht werden, dass das Gerät (nahezu unmittelbar) gesperrt wird, falls sich der Schlüssel von der Freigabevorrichtung entfernt. Ist dies der Fall, wird erneut durch die Freigabevorrichtung das Abfragefeld erzeugt.

Gemäß einer weiteren Ausführungsform des erfindungsgemäßen Systems kann die erste Freigabevorrichtung eingerichtet sein zum Aussenden eines niederfrequenten Abfragefeldes.

Gemäß einer bevorzugten Ausführungsform des erfindungsgemäßen Systems kann die erste Freigabevorrichtung eingerichtet sein zum Aussenden eines Abfragefeldes zwischen 100kHz und 150kHz.

Bevorzugt ist, dass die Freigabevorrichtung ein niederfrequentes Abfragefeld aussendet. Dieses niederfrequente Abfragefeld ist bevorzugt ein magnetisches Feld, welches mit Hilfe einer Spule erzeugt werden kann. Dadurch, dass das Abfragefeld niederfrequent ist, lässt sich dessen Empfangsreichweite leicht und insbesondere besonders exakt einstellen. Bevorzugt sind Empfangsreichweite zwischen 30 und 90cm. Im Nahbereich ist die Feldstärke des magnetischen Feldes proportional zu 1/r³.

Die Sendeantenne der Freigabevorrichtung und die Empfangsantenne im Schlüssel für das Abfragefeld sind insbesondere für eine magnetische Kopplung ausgelegt. Die Antennen sind vorzugsweise Spulen, deren ausgesendetes Feld eine im Vergleich zum elektrischen Anteil erheblich höheren magnetischen Anteil hat. Das Abfragefeld ist somit bevorzugt ein magnetisches Feld.

Wird in dem Schlüssel eine Empfangsschwelle für eine bestimmte Feldstärke des Magnetfeldes eingestellt, so kann die Empfangsreichweite des Abfragefeldes sehr genau eingestellt werden.

Bevorzugt ist, dass die Freigabevorrichtung zum Aussenden eines 125Hz Abfragefeldes eingerichtet ist.

Gemäß einer weiteren Ausführungsform des erfindungsgemäßen Systems kann der erste Schlüssel (vorzugsweise jeder Schlüssel des Systems) eine das Abfragefeld empfangende Empfangsspule aufweisen, wie bereits beschrieben wurde.

Gemäß einer bevorzugten Ausführungsform des erfindungsgemäßen Systems kann die Empfangsspule eine im wesentlichen richtungsunabhängige Empfangscharakteristik haben.

Um zu erreichen, dass die Baugröße der Freigabevorrichtung klein bleibt, wird auch vorgeschlagen, dass die Freigabevorrichtung eine das Abfragefeld erzeugende Sendespule aufweisen kann. Da das Abfragefeld nur eine geringe Reichweite aufweisen muss und außerdem insbesondere nicht zur energetischen Speisung des Schlüssels dient, reicht eine Sendespule von kleiner Baugröße.

Um einen guten Empfang des Antwortfeldes zu ermöglichen, wird insbesondere vorgeschlagen, dass die Freigabevorrichtung eine von der Sendespule getrennte Empfangsantenne aufweist. Über die Empfangsantenne kann das Antwortfeld empfangen werden. Die Empfangsantenne in der Freigabevorrichtung kann eine an Hochfrequenzen angepasste HF-Antenne sein. Die HF-Antenne ist an den Empfangsschaltkreis angepasst. Die Antenne kann als Loop (Schleife) auf der Leiterbahn gebildet sein. Es ist erkannt worden, dass durch die Verwendung einer Sendespule und einer davon getrennten Empfangsantenne die Übertragungsqualität bei gleichzeitiger Reduktion der Baugröße erhöht werden kann.

Zum Empfangen des Abfragefeldes weist der Schlüssel bevorzugt eine Empfangsspule auf. Diese Empfangsspule kann beispielsweise eine richtungsunabhängige Empfangscharakteristik aufweisen, wie bereits beschrieben wurde. Dies ist beispielsweise mit Hilfe einer 3-D Ferrit-Spule möglich. Bei einer solchen 3-D Ferrit-Spule sind drei Spulen angeordnet, die in drei senkrecht zueinander stehenden Ebenen ausgerichtet sind. Die Empfangsspule ist für den Empfang eines Magnetfeldes ausgelegt.

Gemäß einer weiteren Ausführungsform des erfindungsgemäßen Systems kann der erste Schlüssel (und insbesondere jeder weitere Schlüssel des Systems) eine eine Sendespule mit einem den ersten Schlüsselcode aufweisendem Freigabesignal beaufschlagende Treiberschaltung aufweisen.

Bevorzugt weist der Schlüssel zur Erzeugung des Antwortfeldes eine Treiberschaltung auf. Die Treiberschaltung ist insbesondere eingerichtet zum Beaufschlagen einer Sendeantenne mit einem den Schlüsselcode aufweisenden Freigabesignal. Die Sendeantenne ist bevorzugt dazu ausgelegt, hochfrequente Felder auszusenden. Über die Sendeantenne kann das Antwortfeld erzeugt werden. Dieses weist zumindest den Schlüsselcode auf. Der Schlüsselcode wird insbesondere mittels eines Freigabesignals an die Sendeantenne angelegt. Das Freigabesignal zusammen mit dem Schlüsselcode kann in einer Treiberschaltung erzeugt werden.

Bevorzugt ist es, dass die Treiberschaltung batteriegespeist ist. **In** diesem Fall wird die Energieversorgung für das Antwortfeld durch eine Batterie ermöglicht. Es ist nicht mehr notwendig, dass die Treiberschaltung ihre Energie über das Abfragefeld bezieht.

Vielmehr ermöglicht eine solche Ausgestaltung eine eigengespeiste Erzeugung des Antwortfeldes.

Gemäß einer weiteren Ausführungsform des erfindungsgemäßen Systems kann die Sendespule zum hochfrequenten Aussenden des Freigabesignals eingerichtet sein.

Das Antwortfeld ist bevorzugt ein hochfrequentes, elektromagnetisches Feld. Es hat sich insbesondere gezeigt, dass eine Frequenz im Megahertzbereich, bevorzugt zwischen 400 und 950 MHz, bspw. 433MHz, 868MHz 915MHz, 916MHz, für das Antwortfeld vorteilhaft ist. Dieses Frequenzband ist insbesondere ein frei nutzbares ISM-Band und somit gebührenfrei. Das Antwortfeld ist insbesondere ein elektrisches Feld mit einem elektrischen Feldanteil, der erheblich höher ist als der magnetische Anteil.

Wie bereits zuvor erwähnt, ist es besonders bevorzugt, dass die Freigabevorrichtung eine Empfangsantenne zum Austauschen von zusätzlichen Authentifizierungsinformationen mit dem Schlüssel nach dem Empfangen eines Schlüsselcodes aufweist. Die Empfangsantenne ist bevorzugt derart gebildet, dass sie für den Empfang von Hochfrequenzfeldern optimiert ist. Über die Empfangsantenne kann die Freigabevorrichtung mit dem Schlüssel Informationen über ein Hochfrequenzfeld austauschen. Dadurch, dass der Schlüssel das Hochfrequenzfeld eigengespeist erzeugt, kann dieses eine hohe E-Feldstärke aufweisen, so dass die Empfangsantenne kleinbauend gestaltet sein kann.

Gemäß einer weiteren Ausführungsform des erfindungsgemäßen Systems kann die Freigabevorrichtung eingerichtet sein zum Austauschen von Authentifizierungsinformation mit dem Schlüssel nach dem Empfangen des Schlüsselcodes von dem Schlüssel.

Gemäß einer weiteren Ausführungsform des erfindungsgemäßen Systems kann die erste Freigabevorrichtung eingerichtet sein zum Freigeben des ersten Gerätes (nur) nach erfolgreicher Authentifizierung des ersten Schlüssels.

Um insbesondere zu gewährleisten, dass ein Schlüssel in dem Empfangsbereich einer Freigabevorrichtung (schnell) erkannt wird, wird gemäß einer Ausführungsform vorgeschlagen, dass das Abfragefeld mit zeitlichen Abständen erzeugt wird und nach dem Aussenden des Abfragefeldes ein Empfangen des Schlüsselcodes überwacht wird. **In** der Freigabevorrichtung wird insbesondere in einem so genannten Broadcast-Modus das Abfragefeld in zeitlichen Abständen erzeugt und es wird überwacht, ob in Antwort auf das Abfragefeld ein Antwortfeld mit einem Schlüsselcode empfangen wird.

Es ist bevorzugt, dass ein den Schlüsselcode aufweisendes Freigabesignal zur Erzeugung des Antwortfeldes beim Empfangen des Abfragefeldes in dem Schlüssel eigengespeist erzeugt wird. Der Schlüssel erzeugt hierzu, beispielsweise durch eine Batteriespeisung, ein Freigabesignal, welches den Schlüsselcode enthält. Das Freigabesignal kann an die Sendeantenne des Schlüssels angelegt werden und ein Hochfrequenzfeld erzeugt werden.

Nachdem der Schlüssel über das hochfrequente Antwortfeld den Schlüsselcode (z.B. zumindest seine Identifikationsnummer) an die Freigabevorrichtung übermittelt hat, kann zwischen Freigabevorrichtung und Schlüssel über das hochfrequente Antwortfeld eine Authentifizierung des Schlüssels durchgeführt werden, wie bereits beschrieben wurde.

Um insbesondere zu überwachen, ob der Schlüssel im Empfangsbereich der Freigabevorrichtung verbleibt, oder aus dem Empfangsbereich der Freigabevorrichtung entfernt wird, wird insbesondere vorgeschlagen, dass die optionalen Authentifizierungsinformation in zeitlichen Abständen zwischen Freigabevorrichtung und Schlüssel ausgetauscht werden und dass Gerät nur bei erfolgreicher Authentifizierung freigeschaltet bleibt. Dies bedeutet insbesondere, dass für den Zeitraum, in dem der Schlüssel in dem Empfangsbereich der Freigabevorrichtung verbleibt, das zugeordnete Gerät freigeschaltet bleibt. Dies wird durch eine regelmäßige Abfrage des Schlüssels sichergestellt.

Entfernt sich der Schlüssel aus dem Empfangsbereich der Freigabevorrichtung, wird gemäß eines vorteilhaften Ausführungsbeispiels vorgeschlagen, dass das Gerät gesperrt wird. Entfernt sich der Nutzer (mit dem Schlüssel) von dem Gerät, wird das Gerät automatisch gesperrt.

Durch die automatische Freigabe und Sperrung des Geräts müssen Nutzer nicht mehr aufgefordert werden, ihre Passwörter für den Zugang zum Computer einzugeben und beim Verlassen des Geräts diesen vor fremden Zugriffen zu schützen. Die Sicherheit von Computernetzen wird erheblich erhöht, da der Zugang zu dem Computer automatisch gesperrt wird, wenn ein berechtigter Nutzer, beziehungsweise der dem Nutzer zugeordnete Schlüssel, sich aus dem Empfangsbereich der Freigabevorrichtung entfernt.

Durch eine magnetische Kopplung zwischen Freigabevorrichtung und Schlüssel mit Hilfe des magnetischen Abfragefeldes kann eine genaue Reichweiteneinstellung erzielt werden. Daher wird das Gerät insbesondere nur dann freigeschaltet, falls sich ein berechtigter Schlüssel in einem bestimmten Umkreis um die Freigabevorrichtung herum befindet. Es wird verhindert, dass Schlüssel, die sich beispielsweise weiter als 1,50 m von der Freigabevorrichtung entfernt befinden, eine zufällige Freigabe des Geräts verursachen.

Ein noch weiterer Aspekt der Erfindung ist ein Computerprogramm, umfassend Befehle, die bei der Ausführung des Computerprogramms durch mindestens einen Prozessor eines (zuvor beschriebenen) Hintergrundsystems diesen veranlassen, das zuvor beschriebene Verfahren (nach einem der Ansprüche 1 bis 4) auszuführen und/oder zu steuern.

Das Computerprogramm, insbesondere die Instruktionen bzw. Programmanweisungen, können in einem Computerprogrammprodukt gespeichert sein, insbesondere einem Speichermittel in Form eines Programmspeichers. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann ein Hintergrundsystem (bzw. eine Datenverarbeitungsvorrichtung des Hintergrundsystems) einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der mindestens eine Prozessor der Datenverarbeitungsvorrichtung kann beispielsweise Zwischenergebnisse oder Ähnliches in dem Hauptspeicher speichern.

Die zuvor beschriebenen Module sind vorzugsweise zumindest teilweise Softwareelemente (z.B. ausführbarer Code) und können von einem Prozessor der Datenverarbeitungsvorrichtung des Hintergrundsystems ausgeführt und/oder gesteuert werden. Es sei ferner angemerkt, dass Begriffe, wie "erste"; "zweite" etc. nicht eine Reihenfolge angeben, sondern insbesondere zur Unterscheidung zweier Elemente (z.B. Bestimmungsmodul, Gerät, Freigabevorrichtung etc.) dienen, es sei denn eine solche zeitliche Reihenfolge ist explizit angegeben.

Die Merkmale der Verfahren, Hintergrundsysteme, Systeme und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren, das erfindungsgemäße Hintergrundsystem, das erfindungsgemäße Computerprogramm und das erfindungsgemäße System auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1a: eine schematische Ansicht eines Ausführungsbeispiels eines Systems gemäß der vorliegenden Erfindung mit einem Ausführungsbeispiel eines Hintergrundsystems gemäß der vorliegenden Erfindung in einem ersten Zustand,
- Fig. 1b: eine schematische Ansicht des Ausführungsbeispiels nach Figur 1a in einem zweiten Zustand,
- Fig. 2: eine schematische Teilansicht eines weiteren Ausführungsbeispiels eines Systems gemäß der vorliegenden Erfindung, und
- Fig. 3: ein Diagramm eines Ausführungsbeispiels eines Verfahrens gemäß der vorliegenden Erfindung.

Nachfolgend werden für ähnliche Elemente ähnliche Bezugszeichen verwendet.

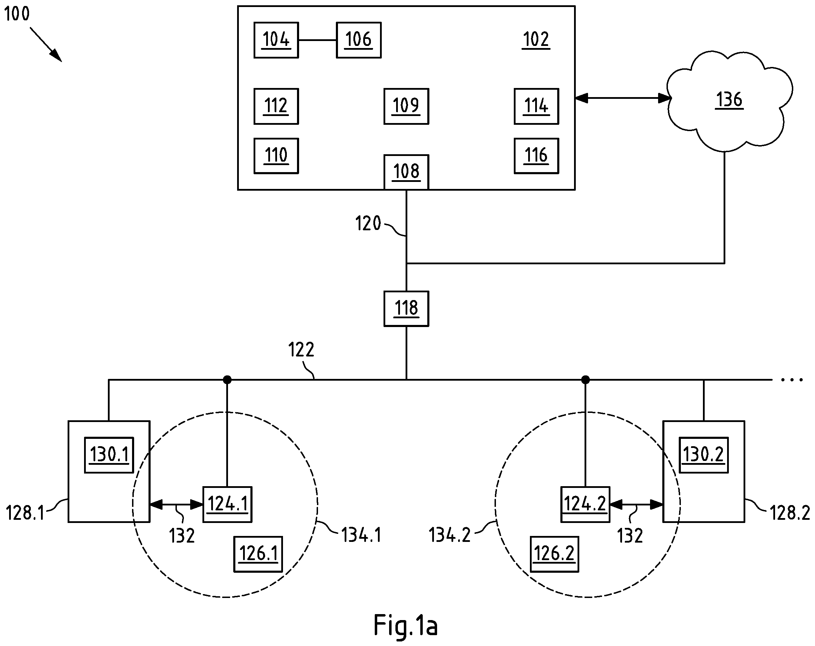

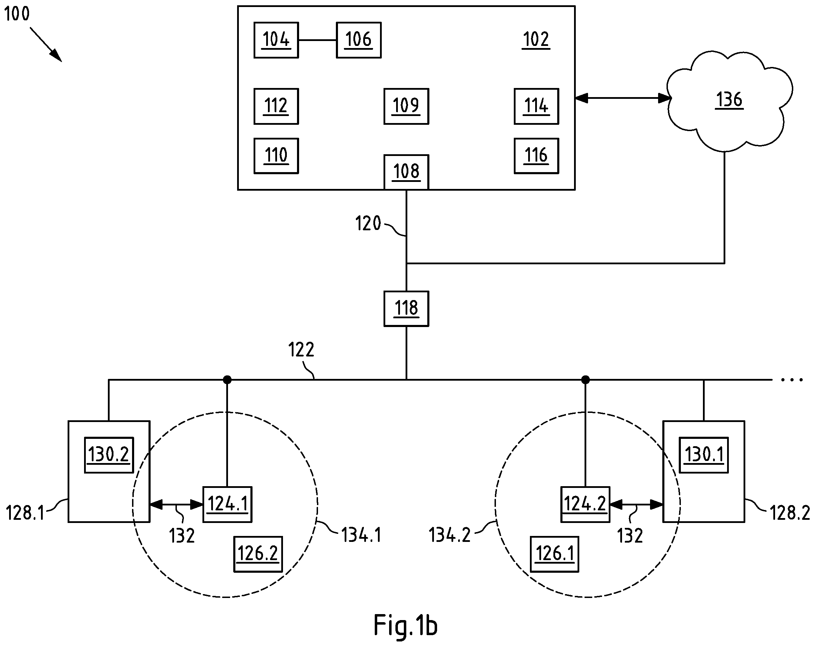

Die Figuren 1a und 1b zeigen schematische Ansichten eines Ausführungsbeispiels eines Systems 100 gemäß der vorliegenden Erfindung mit einem Ausführungsbeispiel eines Hintergrundsystems 102 gemäß der vorliegenden Erfindung in einem ersten Zustand und einen zweiten Zustand. Insbesondere kann das Hintergrundsystem 102 durch mindestens eine Datenverarbeitungsvorrichtung gebildet sein. Das Hintergrundsystem 102, insbesondere die Datenverarbeitungsvorrichtung, kann insbesondere mindestens einen Prozessor 104 und mindestens ein Speichermittel 106 umfassen. Prozessor 104 und Speichermittel 106 sind insbesondere eingerichtet zum Steuern und/oder Ausführen der Module des Hintergrundsystems 102.

Das dargestellte System 100 umfasst mindestens eine Freigabevorrichtung 124.1, 124.2, vorzugsweise eine Mehrzahl von Freigabevorrichtungen 124.1, 124.2. Beispielhaft sind eine erste Freigabevorrichtung 124.1 und eine zweite Freigabevorrichtung 124.2 dargestellt.

Vorzugsweise umfasst das System 100 mindestens ein Gerät 128.1, 128.2 (z.B. einen Computer), vorzugsweise eine Mehrzahl von Geräten 128.1, 128.2. Beispielhaft sind ein erstes Gerät 128.1 und ein zweites Gerät 128.2 dargestellt.

Die erste Freigabevorrichtung 124.1 ist insbesondere dem ersten Gerät 128.1 (fest) zugeordnet (dies ist durch den Pfeil 132 kenntlich gemacht). Die zweite Freigabevorrichtung 124.2 ist insbesondere dem zweiten Gerät 128.2 (fest) zugeordnet (dies ist durch den weiteren Pfeil 132 kenntlich gemacht.

Ferner ist eine Routervorrichtung 118 vorgesehen. Insbesondere kann das System 100 die mindestens eine Routervorrichtung 118 (z.B. ein WLAN-Router oder dergleichen) umfassen. Die Geräte 128.1, 128.2 sind über ein internes Netzwerk 122 mit der Routervorrichtung 118 verbunden. Die Freigabevorrichtungen 124.1, 124.2 sind insbesondere ebenfalls über das interne Netzwerk 122 mit der Routervorrichtung 118 verbunden.

Die Routervorrichtung 118 ist vorliegend über ein Fernnetz 120 mit dem Hintergrundsystem 102 verbunden.

Darüber hinaus ist ein Anwendungsspeicher 136 vorgesehen, beispielsweise in Form einer Cloud, wie zuvor beschrieben wurde. Das System 100 kann insbesondere den Anwendungsspeicher 136 mit einer Mehrzahl von (nutzerspezifischen) Anwendungen 130.1, 130.2 umfassen, die insbesondere mittels der Geräte 128.1, 128.2 ausführbar bzw. bedienbar sind.

Darüber hinaus ist mindestens ein Schlüssel 126.1, 126.2 vorgesehen. Das System 100 kann den mindestens einen Schlüssel 126.1, 126.2 umfassen, vorzugsweise eine Mehrzahl von Schlüsseln 126.1, 126.2. Beispielhaft sind ein erster Schlüssel 126.1, der insbesondere einem ersten (nicht dargestellten) Nutzer zugeordnet ist, und ein zweiter Schlüssel 126.2 dargestellt, der insbesondere einem zweiten (nicht dargestellten) Nutzer zugeordnet ist.

Ferner sind eine erste (maximale) Empfangsreichweite 134.1 der ersten Freigabevorrichtung 124.1 und eine zweite (maximale) Empfangsreichweite 134.2 der zweiten Freigabevorrichtung 124.2 vorgesehen. Wie noch näher erläutert werden wird, kann jede Freigabevorrichtung 124.1, 124.2 ein jeweiliges Abfragefeld mit einer jeweiligen Empfangsreichweite 134.1, 134.2 aussenden.

In dem ersten Zustand, der in Figur 1a dargestellt ist, befinden sich beispielhaft der erste Schlüssel 126.1 in der Empfangsreichweite 134.1 der ersten Freigabevorrichtung 124.1 und der zweite Schlüssel 126.2 in der Empfangsreichweite 134.2 der zweiten Freigabevorrichtung 124.2. In dem zweiten Zustand, der in Figur 1b dargestellt ist, befinden sich beispielhaft der erste Schlüssel 126.1 in der Empfangsreichweite 134.2 der zweiten Freigabevorrichtung 124.2 und der zweite Schlüssel 126.2 in der Empfangsreichweite 134.1 der ersten Freigabevorrichtung 124.1.

Das dargestellte Hintergrundsystem 102 umfasst ein Empfangsmodul 108. Das Empfangsmodul 108 ist zumindest eingerichtet zum Empfangen eines ersten Datensatzes, enthaltend einen ersten Schlüsselcode des ersten Schlüssels 126.1 und eine erste Freigabevorrichtungskennung der ersten Freigabevorrichtung 124.1, von der ersten Freigabevorrichtung 124.1 über die Routervorrichtung 118, wenn sich der erste Schlüssel 126.1, wie in Figur 1a gezeigt, in der (maximalen) Empfangsreichweite 134.1 der ersten Freigabevorrichtung 124.1 befindet. Insbesondere wird ein entsprechender Datensatz generiert und durch die Freigabevorrichtung 124.1 an das Hintergrundsystem 102 übertragen. Ferner kann ein Prüfen des Schlüsselcodes (durch die Freigabevorrichtung 124.1 und/oder das Hintergrundsystem 102) erfolgen und insbesondere bei erfolgreichen Prüfung (wenn festgestellt wird, dass der Schlüsselcode zur Nutzung des Geräts 128.1 berechtigt) eine Freigabe des ersten Geräts 128.1 erfolgen.

Das Hintergrundsystem 102 umfasst mindestens ein erstes Bestimmungsmodul 110. Das erste Bestimmungsmodul 110 ist eingerichtet zum Bestimmen eines mit der ersten Freigabevorrichtung 124.1 gekoppelten ersten Geräts 128.1, basierend auf der empfangenen ersten Freigabevorrichtungskennung und einer ersten Zuordnungsdatenbank 114 (z.B. des Hintergrundsystems 102), enthaltend zumindest eine erste Zuordnung zwischen der ersten Freigabevorrichtungskennung und des ersten Geräts 128.1 bzw. der entsprechenden Gerätekennung. Wie beschrieben wurde, können sämtliche Zuordnungen zwischen jeweiligen Freigabevorrichtungen und jeweiligen Geräten des Systems 100 in der ersten Zuordnungsdatenbank 114 gespeichert sein

Das Hintergrundsystem 102 umfasst mindestens ein zweites Bestimmungsmodul 112. Das zweite Bestimmungsmodul 112 ist eingerichtet zum Bestimmen einer ersten mit dem ersten Schlüssel 126.1 verknüpften Anwendung 130.1, basierend auf dem empfangenen ersten Schlüsselcode und einer zweiten Zuordnungsdatenbank 116 (z.B. des Hintergrundsystems 102), enthaltend zumindest eine erste Verknüpfung zwischen der mindestens einen ersten Anwendung 130.1 und dem ersten Schlüsselcode. Wie beschrieben wurde, können sämtliche Verknüpfungen zwischen jeweiligen Schlüsseln und jeweiligen Anwendungen des Systems 100 in der zweiten Zuordnungsdatenbank 116 gespeichert sein

Das Hintergrundsystem 102 umfasst mindestens ein Bereitstellmodul 109. Das Bereitstellmodul 109 ist eingerichtet zum Bereitstellen zumindest der ersten Anwendung 130.1 über die Routervorrichtung 118, derart, dass die erste Anwendung 130.1 auf dem ersten Gerät 128.1 ausführbar ist. Insbesondere kann das Bereitstellen ein Aufbauen einer Datenverbindung via TCP/IP zwischen dem bestimmten (und insbesondere freigegebenen) Gerät 128.1 und dem Anwendungsspeicher 136 (z.B. eine Cloud bzw. ein Cloudsystem) umfassen, so dass die bestimmte Anwendung 130.1 durch das bestimmte Gerät 128.1 ausführbar ist. Mit anderen Worten, der Nutzer mit dem Schlüssel 126.1 kann unmittelbar die bestimmte Anwendung 130.1 an dem bestimmten Gerät 128.1 ausführen.

Das Empfangsmodul 108 ist insbesondere ferner eingerichtet zum Empfangen eines zweiten Datensatzes, enthaltend einen zweiten Schlüsselcode des zweiten Schlüssels 126.2 und eine zweite Freigabevorrichtungskennung der zweiten Freigabevorrichtung 124.2, von der zweiten Freigabevorrichtung 124.2 über die Routervorrichtung 118, wenn sich der zweite Schlüssel 126.2, wie in Figur 1a gezeigt, in der (maximalen) Empfangsreichweite 134.2 der zweiten Freigabevorrichtung 124.2 befindet. Insbesondere wird ein entsprechender Datensatz generiert und durch die Freigabevorrichtung 124.2 an das Hintergrundsystem 102 übertragen. Ferner kann ein Prüfen des Schlüsselcodes (durch die Freigabevorrichtung 124.2 und/oder das Hintergrundsystem 102) erfolgen und insbesondere bei erfolgreichen Prüfung (wenn festgestellt wird, dass der Schlüsselcode zur Nutzung des Geräts 128.2 berechtigt) eine Freigabe des zweiten Geräts 128.2 erfolgen.

Das erste Bestimmungsmodul 110 ist insbesondere ferner eingerichtet zum Bestimmen eines mit der zweiten Freigabevorrichtung 124.2 gekoppelten zweiten Geräts 128.2, basierend auf der empfangenen zweiten Freigabevorrichtungskennung und der ersten Zuordnungsdatenbank 114 (z.B. des Hintergrundsystems 102), enthaltend zumindest eine zweite Zuordnung zwischen der zweiten Freigabevorrichtungskennung und des zweiten Geräts 128.2 bzw. der entsprechenden Gerätekennung.

Das zweite Bestimmungsmodul 112 ist insbesondere ferner eingerichtet zum Bestimmen einer zweiten mit dem zweiten Schlüssel 126.2 verknüpften Anwendung 130.2, basierend auf dem empfangenen zweiten Schlüsselcode und einer zweiten Zuordnungsdatenbank 116 (z.B. des Hintergrundsystems 102), enthaltend zumindest eine zweite Verknüpfung zwischen der mindestens einen zweiten Anwendung 130.2 und dem zweiten Schlüsselcode.

Das Bereitstellmodul 109 ist insbesondere ferner eingerichtet zum Bereitstellen zumindest der zweiten Anwendung 130.2 über die Routervorrichtung 118, derart, dass die zweite Anwendung 130.2 auf dem zweiten Gerät 128.2 ausführbar ist. Insbesondere kann das Bereitstellen ein Aufbauen einer Datenverbindung via TCP/IP zwischen dem bestimmten (und insbesondere freigegebenen) Gerät 128.2 und dem Anwendungsspeicher 136 (z.B. eine Cloud bzw. ein Cloudsystem) umfassen, so dass die bestimmte Anwendung 130.2 durch das bestimmte Gerät 128.2 ausführbar ist. Mit anderen Worten, der weitere Nutzer mit dem Schlüssel 126.2 kann unmittelbar die bestimmte Anwendung 130.2 an dem bestimmten Gerät 128.2 ausführen.

Wie bereits beschrieben wurde, kann vorzugsweise ein Gerät 128.1, 128.2 für einen Nutzer mit einem diesem Nutzer zugeordneten Schlüssel 126.1, 126.2 im Wesentlichen nur so lange freigegeben sein, wie der Schlüssel 126.1, 126.2 in der (maximalen) Empfangsreichweite 134.1, 134.2 der diesem Gerät 128.1, 128.2 zugeordneten Freigabevorrichtung 124.1, 124.2 anwesend ist. Insbesondere kann zumindest ein Beenden des Ausführens der bestimmten Anwendung 130.1, 130.2 erfolgen, wenn der entsprechende Schlüssel 126.1, 126.2 nicht mehr in der entsprechenden Empfangsreichweite 134.1, 134.2 der entsprechenden Freigabevorrichtung 124.1, 124.2 detektiert wird bzw. erfasst wird.

Wenn also ein Schlüssel 126.1, 126.2 außerhalb der (maximalen) Empfangsreichweite 134.1, 134.2 einer Freigabevorrichtung 124.1, 124.2 ist, beispielsweise weil sich der Nutzer mit dem Schlüssel 126.1, 126.2 entfernt hat, kann zumindest die Anwendung 130.1, 130.2 beendet werden. Vorzugsweise kann das Beenden der Anwendung 130.1, 130.2 durch ein Sperren des bestimmten Geräts 128.1, 128.2 erfolgen, beispielsweise durch die Freigabevorrichtung 124.1, 124.2. Ein Beenden (insbesondere Sperren) der Anwendung 130.1, 130.2 kann unmittelbar bei einem Erfassen, dass der Schlüssel 126.1, 126.2 die Empfangsreichweite 134.1, 134.2 der Freigabevorrichtung 124.1, 124.2 oder nach ein bestimmten Zeitdauer (z.B. zwischen 0,5 s und 60 s, vorzugsweise zwischen 1 s und 5 s) nach dieser Detektion erfolgen.

Wenn sich nun der erste Nutzer mit seinem ersten Schlüssel 126.1 von dem ersten Gerät 128.1 zu dem zweiten Gerät 128.2 bewegt, während sich beispielsweise der zweite Nutzer mit seinem zweiten Schlüssel 126.2 von dem zweiten Gerät 128.2 zu dem ersten Gerät 128.1 bewegt, kann sich insbesondere der in Figur 1b dargestellte (lediglich beispielhafte) Zustand einstellen.

Nun befindet sich der zweite Schlüssel 126.2 in der Empfangsreichweite 134.1 der ersten Freigabevorrichtung 124.1. In zuvor beschriebener Weise kann das erste Gerät 128.1 und die zweite Anwendung 130.2 anhand eines weiteren Datensatzes bestimmt werden, enthaltend die erste Freigabevorrichtungskennung und den zweiten Schlüsselcode. Wie in der Figur 1b angedeutet, wird nun die zweite Anwendung 130.2 an dem bzw. mittels des ersten (für den zweiten Schlüssel 126.2 freigegebenen) Gerät/s 128.1 ausgeführt. Mit anderen Worten, die Erfindung ermöglicht ein Mitnehmen einer Anwendung 130.2 von dem zweiten Gerät 128.2 zu dem ersten Gerät 128.1 durch einen Nutzer mit einem Schlüssel 126.2.

Ferner befindet sich nun der erste Schlüssel 126.1 in der Empfangsreichweite 134.2 der zweiten Freigabevorrichtung 124.2. In zuvor beschriebener Weise kann das zweite Gerät 128.2 und die erste Anwendung 130.1 anhand eines weiteren Datensatzes bestimmt werden, enthaltend die zweite Freigabevorrichtungskennung und den ersten Schlüsselcode. Wie in der Figur 1b angedeutet, wird nun die erste Anwendung 130.1 an dem bzw. mittels des zweiten (für den ersten Schlüssel 126.1 freigegebenen) Gerät/s 128.2 ausgeführt. Mit anderen Worten, die Erfindung ermöglicht ein Mitnehmen einer Anwendung 130.1 von dem ersten Gerät 128.1 zu dem ersten Gerät 128.2 durch einen Nutzer mit einem Schlüssel 126.1.

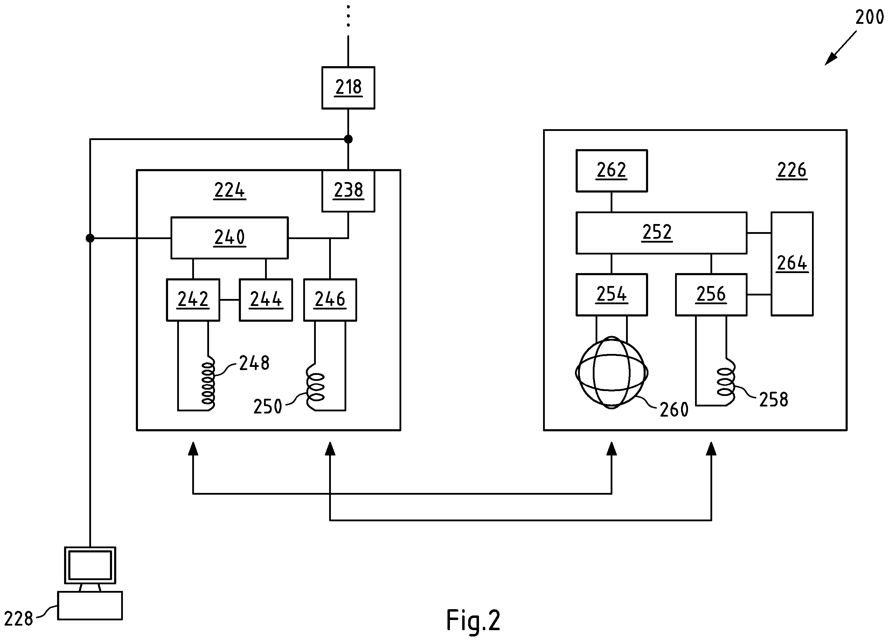

Die Figur 2 zeigt eine schematische Teilansicht eines weiteren Ausführungsbeispiels eines Systems 200 gemäß der vorliegenden Erfindung. Zur Vermeidung von Wiederholungen werden nachfolgend im Wesentlichen nur die Unterschiede zu dem Ausführungsbeispiel nach Figur 1a/1b erläutert und ansonsten auf die Ausführungen zur Figur 1 verwiesen. Insbesondere wurde zu Gunsten einer besseren Übersicht auf die Darstellung des Hintergrundsystems verzichtet. Dieses kann beispielsweise entsprechend dem Hintergrundsystem nach Figur 1a/1b gebildet sein. Entsprechendes gilt für den Anwendungsspeicher.

Gezeigt ist in der Figur 1 als Gerät 228 ein Computer, der mit Freigabevorrichtung 224 verbunden ist. Die Freigabevorrichtung 224 weist beispielhaft eine Steuerung 240, eine erste Sende-/ Empfangseinheit 242, eine Spule 248, eine Speichereinheit 244, eine zweite Sende-/Empfangseinheit 246, und eine Hochfrequenzantenne 250 auf.

Weiter dargestellt ist ein bevorzugtes Ausführungsbeispiel eines Schlüssel 226. Der Schlüssel 226 weist eine Steuerung 252, eine Sende-/Empfangseinheit 254, eine 3-D Ferrit Spule 260, eine Treiberschaltung 256, eine Hochfrequenzantenne 258, eine Speichereinheit 262 sowie eine Energieversorgung 264 auf.

Die Spulen 248 und 260 sind zum Aussenden und Empfangen von niederfrequenten Magnetfeldern, bevorzugt zwischen 100kHz und 150kHz ausgelegt. Die Sende- /Empfangseinheiten 242 und 254 sind auf das Aussenden und Empfangen dieser niederfrequenten Felder abgestimmt.

Die Sende-/Empfangseinheit 246 ist darauf abgestimmt, Hochfrequenzfelder über die Hochfrequenzantenne 250 zu senden und zu empfangen. Bevorzugt werden hier Trägersignale mit 868MHz an die HF-Antenne 250 angelegt. Die Treiberschaltung 256 ist ebenfalls zum Empfangen und Senden von Hochfrequenzfeldern bei 868MHz ausgelegt. Die Treiberschaltung 256 legt an die HF-Antenne 258 ein entsprechendes Trägersignal an.

Die Speichereinheit 244 speichert vorzugsweise unter anderem einen eindeutigen Bezeichner und/oder einen Freigabevorrichtungskennung für die Freigabevorrichtung 224 (und/oder für den Computer). Außerdem kann die Speichereinheit 244 (gültige) Schlüsselcodes von Schlüsseln 226 speichern. Weiterhin können in der Speichereinheit 244 optional kryptographische Schlüssel für eine verschlüsselte Kommunikation abgespeichert sein.

Die Speichereinheit 262 speichert zumindest einen Schlüsselcode des Schlüssels 226. Ferner kann die Speichereinheit 262 vorzugweise eine Identifikationsnummer des Schlüssels 226 speichern. Außerdem kann die Speichereinheit 262 eine Liste von eindeutigen Bezeichnern von Freigabevorrichtungen 224 sowie verschiedene kryptographische Schlüssel für eine verschlüsselte Kommunikation abspeichern.

Die Energieversorgung 264 ist beispielsweise durch eine Batterie gewährleistet.

Die Steuerungen 240 und 252 steuern die Interoperation zwischen den Modulen innerhalb der Freigabevorrichtung 224, respektive des Schlüssels 226. Die Steuerungen 240 und 252 weisen hierzu beispielsweise integrierte Schaltkreise und/oder Mikroprozessoren auf, die entsprechend programmiert sind.

Darüber hinaus umfasst die Freigabevorrichtung 224 insbesondere ein Kommunikationsmodul 238, eingerichtet zum Kommunizieren mit der Routervorrichtung 218 (bzw. dem Hintergrundsystem via der Routervorrichtung 218). Insbesondere bei Erhalt eines Schlüsselcodes kann durch die Steuerung 240 ein Datensatz generiert werden, enthaltend den von dem Schlüssel 226 empfangenen Schlüsselcode und die gespeicherte Freigabevorrichtungskennung der Freigabevorrichtung 224. Das Kommunikationsmodul 238 kann eingerichtet sein zum Übertragen des generierten Datensatzes an das Hintergrundsystem über die Routervorrichtung 218.

Die Funktion des dargestellten (Teil-)Systems 200 ist insbesondere wie folgt:
Das Gerät 228 ist derart eingerichtet und mit der Freigabevorrichtung 224 verbunden, dass dieses Gerät 228 über die Freigabevorrichtung 224 Freigabeinformationen enthält und insbesondere nur dann einen Zugriff zulässt, wenn die Freigabevorrichtung 224 eine entsprechende Information an das Gerät 228 übermittelt hat. Gleichzeitig kann durch das Bereitstellmodul des Hintergrundsystems in zuvor beschriebener Weise die durch das Hintergrundsystem bestimmte Anwendung über die Routervorrichtung 218 dem (freigegebenen) Gerät 228 bereitgestellt werden.

Zunächst kann das Gerät 228 gesperrt sein. Die Freigabevorrichtung 224 steuert insbesondere über die Steuerung 240 die Sende-/Empfangseinheit 242 an. Die Sende-/Empfangseinheit 242 ermittelt aus der Speichereinheit 244 ihren eindeutigen Bezeichner. Der eindeutige Bezeichner wird auf ein 125Hz Trägersignal aufmoduliert. Das Trägersignal wird über die Spule 248 ausgesendet. Die magnetische Feldstärke des Trägersignals lässt sich über die Sende-/Empfangseinheit 242 einstellen. Bevorzugt ist die magnetische Feldstärke derart, dass das von der Spule 248 erzeugte Abfragefeld eine Reichweite zwischen 0,3 und 1,2m hat.

Das von der Spule 248 ausgesendete, niederfrequente Magnetfeld wird in der 3-D Ferrit Spule 260 des Schlüssels 226 empfangen. Das von der Spule 260 empfangene niederfrequente Signal wird in der Sende-/Empfangseinheit 254 demoduliert. Der in dem Signal enthaltene eindeutige Bezeichner der Freigabevorrichtung 224 wird ermittelt und an die Steuerung 252 übergeben. In der Steuerung 252 wird insbesondere mit Hilfe der in der Speichereinheit 262 gespeicherten eindeutigen Bezeichnern überprüft, ob der empfangene eindeutige Bezeichner mit einem dem Schlüssel 226 zugeordnetem eindeutigen Bezeichner übereinstimmt. Ist dies der Fall, wird der Schlüssel 226 aktiv.

Hierzu ermittelt die Steuerung 252 insbesondere aus der Speichereinheit 262 zumindest den Schlüsselcode des Schlüssels 226, ggf. in Form einer Identifikationsnummer des Schlüssels 226. Zumindest der Schlüsselcode des Schlüssels 226 wird an die Treiberschaltung 256 übergeben. Die Treiberschaltung 256 bezieht ihre Energie aus der Energieversorgung 264. Die Treiberschaltung 256 erzeugt mit der aus der Energieversorgung 264 erhaltenen Energie ein Trägersignal insbesondere bei 868MHz, welches den Schlüsselcode des Schlüssels 226 enthält. Dieses Trägersignal wird an die HF-Antenne 258 angelegt und ein elektrisches HF-Feld wird ausgesendet.

Das von der HF-Antenne 258 ausgesendete Trägersignal wird durch die HF-Antenne 250 der Freigabevorrichtung 224 empfangen. Das empfangene Signal wird in der Sende-/Empfangseinheit 246 ausgewertet und zumindest der Schlüsselcode des Schlüssels 226 wird extrahiert. Der Schlüsselcode des Schlüssels 226 kann an die Steuerung 240 übergeben. Wie bereits beschrieben wurde, kann die Steuerung einen (ersten) Datensatz bilden, enthaltend den empfangenen Schlüsselcode und die Freigabevorrichtungskennung. Dieser Datensatz kann mittels des Kommunikationsmoduls 238 an das Hintergrundsystem übertragen werden.

Die Steuerung 240 kann, insbesondere vor einem Versenden des genannten Datensatzes, überprüfen, ob in der Speichereinheit 244 eine entsprechender Schlüsselcode abgespeichert ist. In der Speichereinheit 244 sind beispielsweise alle Schlüsselcodes aller Schlüssel 226 des Systems 200 gespeichert, die für die Freigabe des Geräts 228 programmiert sind, dem diese Freigabevorrichtung 224 zugeordnet ist. Alternativ oder zusätzlich kann die Prüfung auch durch das Hintergrundsystem erfolgen.

Ist der Schlüsselcode des Schlüssels 226 in der Speichereinheit 2444 gespeichert, instruiert die Steuerung 240 optional die Sende-/Empfangseinheit 242, eine Authentifizierung mit dem Schlüssel 226 durchzuführen. Hierzu werden bidirektional über die HF-Antennen 250, 258 Authentifizierungsinformationen zwischen Freigabevorrichtung 224 und Schlüssel 226 ausgetauscht. Hierbei werden in den Speichereinheiten 244, 262 gespeicherte kryptographische Schlüssel ausgetauscht und entsprechend kodiert. Es eignen sich dazu beispielsweise asymmetrische Verschlüsselungsverfahren. Nachdem eine Authentifizierung erfolgreich durchgeführt wurde, kann die Freigabevorrichtung 224 dem Gerät 228 mitteilen, dass dieses freizugeben ist. Zudem kann ein Aussenden des Datensatzes in zuvor beschriebener Weise veranlasst werden. Das Gerät 228 ist daraufhin durch den Benutzer verfügbar. Das Bereitstellmodul kann die bestimmte Anwendung bereitstellen, wie bereits beschrieben wurde. Bei Varianten der Erfindung kann die Authentifizierung entfallen und eine Freigabe nach erfolgreicher Prüfung des empfangenen Schlüsselcodes erfolgen.

Um zu gewährleisten, dass der Schlüssel 226 in dem Empfangsbereich der Freigabevorrichtung 224 verbleibt und somit das Gerät 228 freigegeben bleiben kann, sendet die Freigabevorrichtung 224 insbesondere in regelmäßigen Abständen über die HF-Antenne 250 Abfragesignale aus, um abzufragen, ob der Schlüssel 226 weiterhin im Empfangsbereich ist. Nur bei einer entsprechenden Antwort des Schlüssels 226 (z.B. enthaltend den Schlüsselcode) über die HF-Antenne 258 bleibt das Gerät 228 entsperrt.

Erfolgt auf eine Abfrage über die Antenne 250 keine entsprechende Antwort des Schlüssels 226 über die Antenne 258, so teilt die Steuerung 240 der Freigabevorrichtung dies dem Hintergrundsystem und/oder dem Gerät 228 (direkt) mit, dass dieser gesperrt werden muss. Das Gerät 228 aktiviert daraufhin insbesondere seine Zugangssperrung, und ein Zugriff auf das Gerät 228 ist nicht mehr möglich.

Um insbesondere zu überprüfen, ob ein Schlüssel 226 erneut in der Nähe Freigabevorrichtung 224 ist, sendet die Freigabevorrichtung 224 in regelmäßigen Abständen über die Spule 248 Abfragesignale aus. Befindet sich kein Schlüssel 226 in dem magnetischen Feld der Spule 248, so verbleibt das Gerät 228 gesperrt. Bewegt sich ein Schlüssel 226 in das Magnetfeld der Spule 248, so erfolgt eine zuvor beschriebene Überprüfung des Schlüssels 226, und bei einer positiven Überprüfung wird das Gerät 228 erneut freigegeben und eine bestimmte Anwendung bereitgestellt.

Das erfindungsgemäße Verfahren und die erfindungsgemäße Vorrichtung ermöglichen eine berührungslose Authentifizierung von Benutzern für Computer. Durch die Verwendung von unterschiedlichen Sende- und Empfangsspulen sowohl in der Freigabevorrichtung 224 als auch im Schlüssel 226 wird gewährleistet, dass bei einer genauen Reichweiteeinstellung eine hohe Übertragungssicherheit ermöglicht wird. Die Freigabevorrichtung 224 und der Schlüssel 226 können kleinbauend gebildet sein, da die Abfragefelder nur mit niedriger Energie ausgestrahlt werden müssen, und der Schlüssel 226 eigengespeist ist.

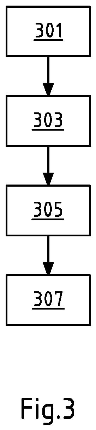

Die Figur 3 zeigt ein Diagramm eines Ausführungsbeispiels eines Verfahrens gemäß der vorliegenden Erfindung.

Das Verfahren dient insbesondere zum Betreiben eines Systems (z.B. nach Figur 1a/1b und/oder 2) mit einem Hintergrundsystem und einer Mehrzahl von Geräten.

**In** einem Schritt 301 erfolgt ein Empfangen, durch ein Empfangsmodul des Hintergrundsystems, eines ersten Datensatzes, enthaltend einen ersten Schlüsselcodes eines ersten Schlüssels und eine erste Freigabevorrichtungskennung einer ersten Freigabevorrichtung, von der ersten Freigabevorrichtung über eine Routervorrichtung, wenn sich der erste Schlüssel in einer Empfangsreichweite der ersten Freigabevorrichtung befindet, wie insbesondere bereits beschrieben wurde.

In einem Schritt 303 erfolgt ein Bestimmen, durch ein erstes Bestimmungsmodul des Hintergrundsystems, eines mit der ersten Freigabevorrichtung gekoppelten ersten Geräts, basierend auf der empfangenen ersten Freigabevorrichtungskennung und einer ersten Zuordnungsdatenbank, enthaltend zumindest eine erste Zuordnung zwischen der ersten Freigabevorrichtungskennung und des ersten Geräts, wie insbesondere bereits beschrieben wurde.

In einem Schritt 305 erfolgt ein Bestimmen, durch ein zweites Bestimmungsmodul des Hintergrundsystems, mindestens einer ersten mit dem ersten Schlüssel verknüpften Anwendung, basierend auf dem empfangenen ersten Schlüsselcode und einer zweiten Zuordnungsdatenbank, enthaltend zumindest eine erste Verknüpfung zwischen der mindestens einen ersten Anwendung und dem ersten Schlüsselcode, wie insbesondere bereits beschrieben wurde.

In einem Schritt 307 erfolgt ein Bereitstellen, durch ein Bereitstellmodul des Hintergrundsystems, zumindest der ersten Anwendung über die Routervorrichtung, derart, dass die erste Anwendung auf dem ersten Gerät ausführbar ist, wie insbesondere bereits beschrieben wurde.

### Bezugszeichenliste:

- 100: System
- 102: Hintergrundsystem
- 104: Prozessor
- 106: Speichermittel
- 108: Empfangsmodul
- 109: Bereitstellmodul
- 110: erstes Bestimmungsmodul
- 112: zweites Bestimmungsmodul
- 114: erste Zuordnungsdatenbank
- 116: zweite Zuordnungsdatenbank
- 118: Routervorrichtung
- 120: Fernnetz
- 122: Netzwerk
- 124: Freigabevorrichtung
- 126: Schlüssel
- 128: Gerät
- 130: Anwendung
- 132: Pfeil
- 134: Empfangsreichweite
- 136: Anwendungsspeicher
- 200: Systems
- 218: Routervorrichtung
- 224: Freigabevorrichtung
- 226: Schlüssel
- 228: Gerät
- 238: Kommunikationsmodul
- 240: Steuerung
- 242: Empfangseinheit
- 244: Speichereinheit
- 246: Empfangseinheit
- 248: Spule
- 250: Hochfrequenzantenne
- 252: Steuerung
- 254: Empfangseinheit
- 256: Treiberschaltung
- 258: Hochfrequenzantenne
- 260: Spule
- 262: Speichereinheit
- 264: Energieversorgung
- 301: Schritt
- 303: Schritt
- 305: Schritt
- 307: Schritt

## Patentansprüche

1. Verfahren, insbesondere zum Betreiben eines Systems mit einem Hintergrundsystem und einer Mehrzahl von Geräten, umfassend:
- Empfangen, durch ein Empfangsmodul des Hintergrundsystems, eines ersten Datensatzes, enthaltend einen ersten Schlüsselcode eines ersten Schlüssels und eine erste Freigabevorrichtungskennung einer ersten Freigabevorrichtung, von der ersten Freigabevorrichtung über eine Routervorrichtung, wenn sich der erste Schlüssel in einer Empfangsreichweite der ersten Freigabevorrichtung befindet,
- Bestimmen, durch ein erstes Bestimmungsmodul des Hintergrundsystems, eines mit der ersten Freigabevorrichtung gekoppelten ersten Geräts, basierend auf der empfangenen ersten Freigabevorrichtungskennung und einer ersten Zuordnungsdatenbank, enthaltend zumindest eine erste Zuordnung zwischen der ersten Freigabevorrichtungskennung und des ersten Geräts,
- Bestimmen, durch ein zweites Bestimmungsmodul des Hintergrundsystems, mindestens einer ersten mit dem ersten Schlüssel verknüpften Anwendung, basierend auf dem empfangenen ersten Schlüsselcode und einer zweiten Zuordnungsdatenbank, enthaltend zumindest eine erste Verknüpfung zwischen der mindestens einen ersten Anwendung und dem ersten Schlüsselcode, und
- Bereitstellen, durch ein Bereitstellmodul des Hintergrundsystems, zumindest der ersten Anwendung über die Routervorrichtung, derart, dass die erste Anwendung auf dem ersten Gerät ausführbar ist.

2. Verfahren nach Anspruch 1, **dadurch gekennzeichnet, dass** das Verfahren umfasst:
- zumindest nahezu kontinuierliches Erfassen einer Anwesenheit des ersten Schlüssels in der Empfangsreichweite der ersten Freigabevorrichtung, und
- zumindest Beenden eines Ausführens der mindestens einen ersten Anwendung auf dem ersten Gerät, wenn festgestellt wird, dass der erste Schlüssel nicht mehr in der Empfangsreichweite der ersten Freigabevorrichtung anwesend ist.

3. Verfahren nach Anspruch 1 oder 2, **dadurch gekennzeichnet, dass** das Verfahren umfasst:
- Empfangen, durch das Empfangsmodul des Hintergrundsystems, eines zweiten Datensatzes, enthaltend den ersten Schlüsselcode des ersten Schlüssels und eine zweite Freigabevorrichtungskennung einer zweiten Freigabevorrichtung, von der zweiten Freigabevorrichtung über die Routervorrichtung, wenn sich der erste Schlüssel in einer Empfangsreichweite der zweiten Freigabevorrichtung befindet,
- Bestimmen, durch das erste Bestimmungsmodul des Hintergrundsystems, eines mit der zweiten Freigabevorrichtung gekoppelten zweiten Geräts, basierend auf der empfangenen zweiten Freigabevorrichtungskennung und der ersten Zuordnungsdatenbank, enthaltend zumindest eine zweite Zuordnung zwischen der zweiten Freigabevorrichtungskennung und des zweiten Geräts,
- Bestimmen, durch das zweite Bestimmungsmodul des Hintergrundsystems, der mindestens einen ersten mit dem ersten Schlüssel verknüpften Anwendung, basierend auf dem empfangenen ersten Schlüsselcode und der zweiten Zuordnungsdatenbank, enthaltend zumindest die erste Verknüpfung zwischen der mindestens einen ersten Anwendung und dem ersten Schlüsselcode, und
- Bereitstellen, durch das Bereitstellmodul des Hintergrundsystems, zumindest der ersten Anwendung über die Routervorrichtung, derart, dass die erste Anwendung auf dem zweiten Gerät ausführbar ist.

4. Hintergrundsystem für ein System einer Mehrzahl von Geräten, umfassend:
- ein Empfangsmodul, eingerichtet zum Empfangen eines ersten Datensatzes, enthaltend einen ersten Schlüsselcode eines ersten Schlüssels und eine erste Freigabevorrichtungskennung einer ersten Freigabevorrichtung, von der ersten Freigabevorrichtung über eine Routervorrichtung, wenn sich der erste Schlüssel in einer Empfangsreichweite der ersten Freigabevorrichtung befindet,
- ein erstes Bestimmungsmodul, eingerichtet zum Bestimmen eines mit der ersten Freigabevorrichtung gekoppelten ersten Geräts, basierend auf der empfangenen ersten Freigabevorrichtungskennung und einer ersten Zuordnungsdatenbank, enthaltend zumindest eine erste Zuordnung zwischen der ersten Freigabevorrichtungskennung und des ersten Geräts,
- ein zweites Bestimmungsmodul, eingerichtet zum Bestimmen einer ersten mit dem ersten Schlüssel verknüpften Anwendung, basierend auf dem empfangenen ersten Schlüsselcode und einer zweiten Zuordnungsdatenbank, enthaltend zumindest eine erste Verknüpfung zwischen der mindestens einen ersten Anwendung und dem ersten Schlüsselcode, und
- ein Bereitstellmodul eingerichtet zum Bereitstellen zumindest der ersten Anwendung über die Routervorrichtung, derart, dass die erste Anwendung auf dem ersten Gerät ausführbar ist.

5. System zur Kontrolle von Geräten, umfassend:
- ein Hintergrundsystem nach Anspruch 4, und
- mindestens die erste dem ersten Gerät zugeordnete Freigabevorrichtung.

6. System nach Anspruch 5, **dadurch gekennzeichnet, dass**
- die erste Freigabevorrichtung ein Kommunikationsmodul umfasst, eingerichtet zum Kommunizieren mit der Routervorrichtung.

7. System nach Anspruch 5 oder 6, **dadurch gekennzeichnet, dass**
- die erste Freigabevorrichtung eingerichtet ist zum Aussenden eines Abfragefelds, und
- das System zumindest den ersten Schlüssel umfasst, eingerichtet zum Aussenden des ersten Schlüsselcodes bei einem Empfangen des Abfragefelds,
- wobei der erste Schlüssel insbesondere eingerichtet ist zum eigengespeisten Aussenden des ersten Schlüsselcodes bei einem Empfangen des Abfragefeldes, und
- wobei die erste Freigabevorrichtung eingerichtet ist zum Freigeben des ersten Gerätes bei einem Empfangen des ersten Schlüsselcodes.

8. System nach einem der Ansprüche 5 bis 7, **dadurch gekennzeichnet, dass**
- die erste Freigabevorrichtung eingerichtet ist zum Aussenden eines niederfrequenten Abfragefeldes,
und/oder
- die erste Freigabevorrichtung eingerichtet ist zum Aussenden eines Abfragefeldes zwischen 100kHz und 150kHz.

9. System nach einem der vorangehenden Ansprüchen 5 bis 8, **dadurch gekennzeichnet, dass**
- der erste Schlüssel eine das Abfragefeld empfangende Empfangsspule aufweist,
- wobei die Empfangsspule insbesondere eine im wesentlichen richtungsunabhängige Empfangscharakteristik hat.

10. System nach einem der vorangehenden Ansprüchen 5 bis 9, **dadurch gekennzeichnet, dass**
- der erste Schlüssel eine eine Sendespule mit einem den ersten Schlüsselcode aufweisendem Freigabesignal beaufschlagende Treiberschaltung aufweist,
- wobei die Treiberschaltung insbesondere batteriegespeist ist.

11. System nach Anspruch 10, **dadurch gekennzeichnet, dass**
- die Sendespule zum hochfrequenten Aussenden des Freigabesignal eingerichtet ist.

12. System nach einem der vorangehenden Ansprüchen 10 bis 11, **dadurch gekennzeichnet, dass**
- die Sendespule zum Aussenden eines Freigabesignals zwischen 400 und 950MHz eingerichtet ist.

13. System nach einem der vorangehenden Ansprüchen, **dadurch gekennzeichnet, dass**
- die Freigabevorrichtung zum Austauschen von Authentifizierungsinformation mit dem Schlüssel nach dem Empfangen des ersten Schlüsselcodes eingerichtet ist.

14. System nach Anspruch 13, **dadurch gekennzeichnet, dass**
- die erste Freigabevorrichtung eingerichtet ist zum Freigeben des ersten Gerätes nach erfolgreicher Authentifizierung des ersten Schlüssels.

15. Computerprogramm, umfassend Befehle, die bei der Ausführung des Computerprogramms durch mindestens einen Prozessor eines Hintergrundsystems diesen veranlassen, das Verfahren nach einem der Ansprüche 1 bis 3 auszuführen und/oder zu steuern.
